Europäisches Patentamt

(19) European Patent Office

Office européen des brevets

(11) EP 0 345 226 B1

(12) **EUROPEAN PATENT SPECIFICATION**

(45) Date of publication and mention
of the grant of the patent:
**20.03.1996 Bulletin 1996/12**

(21) Application number: **89810417.9**

(22) Date of filing: **05.06.1989**

(51) Int. Cl.⁶: **A23G 9/02**, A23C 15/16,
A23C 9/15, A23L 1/19,
A23J 3/04, A23J 3/14,
A23J 3/08

(54) **Concentrated, substantially non-aggregated casein micelles as a fat/cream substitute**

Konzentrierte und im wesentlichen nichtaggregierte Kasein-Mizellen als Ersatz für Fett und Sahne

Micelles de caséine concentrées, essentiellement non agrégées comme substitut de graisse ou crème

(84) Designated Contracting States:
**AT BE CH DE ES FR GB GR IT LI LU NL SE**

(30) Priority: **03.06.1988 US 202082**
**01.06.1989 US 358654**

(43) Date of publication of application:
**06.12.1989 Bulletin 1989/49**

(73) Proprietor: **THE NUTRASWEET COMPANY**
**(a Delaware corporation)**
**Deerfield Illinois 60015 (US)**

(72) Inventors:
• **Habib, Maher**
**Des Plaines Illinois 60016 (US)**
• **Podolski, Joseph S.**
**Skokie Illinois 60077 (US)**

(74) Representative: **Blum, Rudolf Emil Ernst**
**c/o E. Blum & Co**
**Patentanwälte**
**Vorderberg 11**
**CH-8044 Zürich (CH)**

(56) References cited:
**EP-A- 0 185 000**          **EP-A- 0 308 091**
**WO-A-83/00005**          **DE-A- 3 710 152**
**FR-A- 2 197 522**          **FR-A- 2 292 435**
**FR-A- 2 319 300**          **FR-A- 2 330 324**
**FR-A- 2 559 034**          **US-A- 3 995 070**
**US-A- 4 051 269**          **US-A- 4 631 196**
**US-A- 4 689 245**          **US-A- 4 734 287**

Remarks:
The file contains technical information submitted
after the application was filed and not included in this
specification

**Description**

BACKGROUND OF THE INVENTION

The present invention relates to protein materials used as fat or cream substitutes. In particular, concentrated, substantially non-aggregated, casein micelles are employed as fat substitutes and can replace all or a portion of fat or cream in fat/cream containing foods having a pH greater than about 5.6. Additionally, the present invention relates to a method reducing the fat content of these foods and compositions containing concentrated casein micelles as a fat substitute.

Casein micelles are naturally occurring proteinaceous microparticles found in milk and contribute to the turbidity or white color of milk. They generally have a spheroidal shape and a diameter of from about 0.1 to 0.4 μm (microns). Casein is employed as a stabilizing agent for fat emulsions. Casein micelles are pH sensitive and coagulate at a pH under about 5.1 to form cheese. Skim milk contains casein in an amount of about 3.2% by weight of which 80-97% are in the micellar form. (See Fundamentals of Dairy Chemistry, 2nd Edition, Webb et al., eds., The AVI Publishing Co., Inc., Westport, CT., page 607, 1974.) Skim milk also contains about 4.8% by weight lactose (about 52% by weight of the milk solids). In frozen dairy products, such as ice cream, lactose is undesirable in concentrations greater than about 6 % because it crystallizes and contributes a sandy mouthfeel.

EP 0 308 091 is a document published after relevant date (Article 54 (3) EPC). It discloses the substitution of fat by milk solids non-fat especially by enhanced whey protein levels and specific casein to whey ratios. It does not disclose the use of casein in non-aggregated micellar form and in a specified minimal amount but rather the use of soluble casein salts.

U.S. Patent 4,631,196 to Zeller discloses non-fat dairy products containing (1) water, (2) skim milk or cultured skim milk, (3) a mixture of polydextrose and sucrose, (4) milk solids, and (5) stabilizers/emulsifiers.

Among the milk derived solids different forms of casein are mentioned. Specifically disclosed is - besides of skim milk - only the soluble sodium caseinate.

US-4,400,406, too, discloses a whipped frozen dessert product with casein added as milk solids non-fat.

Neither U.S. 4,631,196 nor U.S. 4,400,406 disclose the use of casein in micellar form as fat substitute.

FR-A-2 559 034 discloses a product with reduced sugar content but not a non-fat or low-fat product.

U.S. Patent 4,689,245 to Kosikowski et al. discloses a low-fat dairy coffee whitener. The coffee whitener is made from (1) decreamed milk ultrafiltration retentate having its protein concentrated between 2:1 to 4:1 compared to the protein content of the starting milk, and (2) riboflavin and/or beta carotene as a whitening enhancer.

U.S. Patent 4,734,287 to Singer et al. discloses a proteinaceous, water dispersible macrocolloid having a smooth, emulsion-like organoleptic character when hydrated. The macrocolloid comprises substantially non-aggregated particles of denatured dairy whey protein having a mean diameter particle size distribution in a dried state ranging from 0.1 μm - 2.0 μm with less than about 2 percent of the total number of particles exceeding 3.0 μm in diameter. Singer et al. employ the denatured dairy whey macrocolloid as a fat substitute.

It has been unexpectedly discovered that concentrated, substantially non-aggregated, casein micelles can act as a fat substitute.

SUMMARY OF THE INVENTION

In accordance with the present invention, concentrated, substantially non-aggregated, casein micelles are used as a fat, cream or oil substitute. Concentrated substantially non-aggregated casein micelles are added to frozen desserts in amounts of at least 7% by weight of the frozen dessert and contribute a fat-like mouthfeel to the food. All or a portion of the fat normally in the dessert can be removed. Additional food products in which fat, cream or oil can be replaced by concentrated substantially non-aggregated casein micelles include icings, puddings, whipped toppings, fortified skim milk, dips, spreads and sauces which have a pH over about 5.6.

Of particular interest are frozen dessert products wherein, for example, ultrafiltered skim milk is added to an ice cream formulation in lieu of the cream to provide a final casein micelle concentration of at least 7 percent by weight of the ice cream and preferably at least 8 weight percent. The resulting product is substantially fat free and has the creaminess, i.e., sensory perception, of a premium full fat ice cream, i.e., one having a fat content of 8-16%.

DETAILED DESCRIPTION OF THE INVENTION

In practicing the present invention, substantially non-aggregated casein micelles are employed as a fat or cream substitute in creamy food systems having a pH over about 5.6. The exact amount of casein micelles will vary depending on the particular food product and the amount of fat being replaced. The casein micelle concentration is at least 7 percent by total weight of whipped and quiescently frozen dessert products. It will usually be between 7 and 12 weight percent. Preferably, the casein content is between 8-12 weight percent. The normal casein micelle concentration in skim milk is about 2.3 percent by weight. Provisions of substantially non-aggregated casein micelles in concentrations according to the present invention imparts a fat or creamy mouthfeel to foods. The non-aggregated casein micelles can replace all or a portion of the fat or cream in creamy foods.

Suitable creamy food products include whipped or quiescently frozen or refrigerated desserts such as ice cream-like frozen dairy desserts (ice cream analogs), puddings, whipped toppings and mousses. These food products must have a pH greater than about 5.6. A pH under about 5.6 will cause aggregation of the casein micelles, i.e., cheese. The non-aggregated casein micelles are added to the food products as a replacement for all or a portion of the fat/cream normally present in the food product. Usually the casein micelles are substituted for the fat or cream in the food manufacturing process wherever fat is called for.

The substantially non-aggregated casein micelles are found naturally in mammalian milk. Preferably, cow's milk is the source of the casein because casein is the predominant protein of cow's milk (80% of total protein). Between 80-97% of the casein is in micellar form. All milk sources containing non-aggregated casein which are added to a food product will contribute towards achieving the desired casein concentration. Casein sources include skim milk, whole milk, 2% milk, condensed skim milk, ultrafiltered whole milk and ultrafiltered skim milk. Skim milk contains about 3.6% protein of which 80% is casein. Once skim milk is cooled, then about 80% of the casein is in micellar form, i.e., about 2.3% of the skim milk is micellar casein.

A preferred source of non-aggregated casein micelles is ultrafiltered (UF) skim milk which has been reduced in volume at least about 4 times; i.e., 4X UF skim milk. Preferred UF skim milk is 6X or 8X UF skim milk. Ultrafiltration techniques are well known in the art. Standard commercially available ultrafiltration (UF) membranes are employed. These membranes pass water, lactose and other soluble milk components but retain milk proteins and, optionally, fat in the retentate. The retentate contains the non-aggregated casein micelles and is used as the preferred casein source according to the present invention. A membrane having a rating of about 10,000 Daltons will retain proteins and fat. Larger rated membranes on the order of 100,000 Daltons or more can also be employed which will retain certain proteins but allow others to pass. Ultrafiltration techniques are described in Kosikowski et al., U.S. Patent 4,689,245 and ULTRAFILTRATION AND REVERSE OSMOSIS FOR THE DAIRY INDUSTRY, F.A. GLOVER, NATIONAL INSTITUTE FOR RESEARCH IN DAIRYING, Reading, England, Technical Bulletin No. 5, 1985, both of which are incorporated herein by reference.

Diafiltration techniques can also be employed to further reduce salt and lactose levels in the UF skim milk. Diafiltration techniques are well known to one skilled in the art and basically involve (a) adding water to a UF skim milk retentate to dilute the soluble components, i.e., salt, lactose, and (b) then ultrafiltering this diluted retentate further. The resulting diafiltered UF skim milk product will have lower salt and lactose levels compared to UF skim milk which has not been diafiltered.

In a preferred embodiment, skim milk is ultrafiltered to about 4-9 times its initial volume employing a 10,000 Dalton membrane. The resulting UF skim milk retentate can then optionally be brought back to its original volume by the addition of water and then ultrafiltered to 4-9 times the diluted volume, i.e., diafiltration. The UF skim milk or the diafiltered skim milk is added to food products in amounts to provide a non-aggregated casein micelle concentration which imparts a creamy mouthfeel to the food, i.e., fat substitute. UF skim milk and diafiltered skim milk can be used fresh or can be stored under refrigeration and used at a later date. When refrigerated, UF skim milk concentrates of 6X or more will form a reversible gel.

In preparing a low or no-fat frozen dairy dessert (ice cream analog), standard ice cream manufacturing techniques are employed with the exception that concentrated non-aggregated casein micelles ($\geq$7%wt) are employed instead of the usual amounts of cream (8-16%). Usually, UF skim milk or diafiltered skim milk will provide a major portion of the casein. Other milk components such as condensed skim milk, skim milk, and non-fat milk solids, will also contribute to the minimum 7% casein micelles concentration. A typical frozen dairy dessert will contain:

| Ingredient | Amount (Wt. %) |
|---|---|
| Sugar | 10-20 |
| Stabilizers | 0-1.0 |
| Ultrafiltered milk protein | 3.7-10.2 |
| Egg yolk | 0-3 |
| Corn syrup solids | 0-5 |
| Starch | 0-1 |
| Milk solids, non-fat | 6-12 |
| Water content | 60-70 |

The frozen dairy desserts of the present invention are prepared by blending all of the dry ingredients and then uniformly dispersing them throughout a mixture of the liquid ingredients. It is not critical how this dispersion is achieved. One method is to combine the liquid or wet ingredients in a LIQUIVERTER liquifier and then slowly add the dry blended ingredients into the vortex of the liquid mixture. A frozen dairy dessert mix is made first which contains all ingredients except the flavors. This mix is then pasteurized according to standard continuous or batch pasteurization techniques, i.e., 68°C (155°F) for ½ hour, 79°C (175°F) for 25 seconds or 88°C (190°F) for 4 seconds. High temperature, short residence time pasteurization is preferred because a less cooked flavor results under these conditions.

The pasteurized mix is cooled and the flavors are usually added when the mix reaches about ambient temperature. The flavored frozen dairy dessert mix is then frozen. Usually, air is added during the freezing of the flavored mix, i.e., overrun. Overruns of 50-100% by volume are usually employed although more or less air can be added to the mix if desired. Overruns of between 50 and 75% are preferred.

The frozen dairy desserts of the present invention possess the mouthfeel characteristic of a full fat ice cream with little or no fat/cream. The present frozen dairy desserts can optionally contain egg yolk for flavor and starch for enhanced texture. The frozen dairy dessert can be blended with milk to make milk shake-type beverages.

The following examples illustrate the practice of the present invention but should not be construed as limiting its scope. The lactose levels given in the examples below were determined by estimating the known lactose levels in skim milk, and extrapolation to UF skim milk and diafiltered skim milk and were not done by chemical analysis.

Example 1

Frozen Dairy Dessert

A substantially fat-free frozen dairy dessert was made wherein the casein concentration was 7.44% by weight of the final dairy product. Standard ice cream ingredients and ice cream making procedures were employed except no cream was used. Two sources for non-aggregated casein were employed:

(1) Non-Fat Dry Milk (NFDM); and
(2) Ultra Filtered (UF) skim milk (6X).

NFDM contributed 0.7% protein and UF skim milk contributed 8.6% protein for a total protein content of 9.3% by weight of which 80 percent was casein, i.e., total caffein concentration of 7.44%. The stabilizers (gums) used in this fat-free dairy dessert were xanthan (0.02%), locust bean gum (0.05%) and carrageenan (0.07%). This fat-free frozen dairy dessert tasted dairy-like and had a creamy texture. Regular ice cream containing 12% non-fat milk solids contains about 4.3% total protein, i.e., 3.4% by weight casein.

<u>Example 2</u>

<u>Ultrafiltration of Skim Milk For Use in a Frozen Dairy Dessert</u>

75.7 ℓ (Twenty (20) gallons (gal.)) of skim milk was ultra filtered down to a volume of about (4 gal.) 15.1 ℓ Analysis (wt. %) of the starting skim milk, and the resulting concentrate is given below:

| Component | Skim Milk (%) | Concentrate (%) |
|---|---|---|
| Fat | 0.1 | 0.444 |
| Protein | 3.6 | 15.98 |
| Lactose | 5.1 | 5.1 |
| Ash | 0.7 | 0.7 |
| Water | 90.5 | 0 |
| Total Solids | 9.5 | 22.22 |

This UF skim milk was used to make a frozen dairy dessert. All the ingredients are listed below:

| Ingredient | Weight (g) | Solids (g) |
|---|---|---|
| UF skim milk | 1640 | 364.0 |
| Sugar | 320 | 320.0 |
| NFDM | 40 | 40.0 |
| Whole egg (1.5%) | 56 | 36.4 |
| Gum | | |
| xanthan | 0.4 | 0.4 |
| locust bean | 1.0 | 1.0 |
| carrageenan | 1.5 | 1.5 |
| Flavors | | |
| cream flavor | 0.41 | -- |
| VANIQUE vanilla | 2.46 | -- |
| 4X Bourbon | 4.11 | -- |

The above ingredients were mixed, pasteurized, cooled, flavored and frozen in a Taylor Freezer for 10-15 minutes to a drum temperature of -8°C (18°F). The flavors were added during the cooling period. The resulting product had a creamy texture like regular full fat ice cream.

Example 3

Frozen Dairy Dessert

A fat-free ice cream-like frozen dairy mix was prepared employing the following ingredients:

| Ingredient | Description |
|---|---|
| Keltose™ alginate | Lot 32020A |
| Locust bean gum | Hi-Tec Polymers |
| Carrageenan | Marine Colloids Seakem CM 614 |
| Guar | Uniguar 250 |
| Sugared egg yolk | Waldbaum sugared yolk |
| Corn syrup solids | Star-Dri Lot BO 71722HH |
| Sugar | Cane sugar |
| Condensed skim milk | Great Lakes Milk (29.79% solids) |
| UF skim milk | 26.9% solids (4% lactose) |
| Water | Tap |

The concentration of ingredients was:

| Ingredient | Weight (g) | Wt. % | Solids |
|---|---|---|---|
| Keltose alginate | 7.2 | 0.12 | 7.2 |
| Locust bean gum | 3.0 | 0.05 | 3.0 |
| Carrageenan | 4.5 | 0.08 | 4.5 |
| Guar | 2.2 | 0.04 | 2.2 |
| Sugared yolk | 54 | 0.9 | 27.0 |
| Corn syrup solids | 180 | 3.0 | 180.0 |
| Sugar | 780.0 | 13.0 | 780 |
| Condensed skim milk | 1596.0 | 26.5 | 475.4 |
|  |  |  | (⁻247.2 gm lactose) |
| UF skim milk | 2142.0 | 35.7 | 576.2 |
|  |  |  | (⁻86.68 gm lactose) |
| Water | 1231.1 |  | 0 |
| Total | 6000 gm |  | 2055.5 = 34.3% |

All of the dry ingredients were blended together. The water, yolk, UF skim milk and corn syrup solids were then added to it with mixing. This mixture was heated in a double boiler with stirring to 69°C (157°F) and held at about this temperature for 30 minutes. The maximum temperature reached was 72°C (162°F). The mix was blended and cooled to room temperature and flavored and frozen in a Taylor freezer. The product had a creamy texture like full fat ice cream.

## Example 4

### Frozen Dairy Product

A fat-free ice cream-like dairy mix was prepared with the following ingredients:

| Ingredient | Weight (g) | Wt. % | Solids | Lactose (g) |
|---|---|---|---|---|
| Keltose alginate | 12 | 0.12 | 12 | |
| Locust bean gum | 5 | 0.05 | 5 | |
| Carrageenan | 8 | 0.08 | 8 | |
| Guar | 4 | 0.04 | 4 | |
| Yolk | 90 | 0.9 | 45 | |
| Corn syrup solids | 300 | 3.0 | 300 | |
| Sugar | 1300 | 13.0 | 1300 | |
| Condensed Skim Milk (30.33% solids) | 3131 | 31.31 | 949.6 | 496.5 |
| UF Skim Milk (29.73% solids) | 2611 | 26.11 | 776.3 | 103.4 |
| Water | 2539 | 25.39 | | |
| Totals | 10,000 | 100.00 | 3,399.9 | 599.9 |

All dry ingredients were blended together followed by addition of the liquid ingredients with mixing. This mixture was heated in a double boiler to 63°C (145°F) for ½ hour. A 2,000 g batch of this mix was flavored by mixing in a 0.6% by weight 4x FMC bourbon Vanilla, 0.22% L80-50 and 0.01% Cream starter distillate. This flavored mix was then frozen. The resulting ice cream-like frozen dairy dessert was creamy like full fat ice cream.

## Example 5

### Frozen Dairy Dessert

A fat-free ice cream-like frozen dairy product was prepared employing substantially the same procedures and ingredients described in Example 4 with the exception that corn syrup solids were not used and the total protein was 12.6%, i.e., 9.6% protein from UF skim milk, and 3.0% protein from condensed skim milk. This product had a casein micelle concentration of 10.08% and had a creamy texture like full fat ice cream.

## Example 6

### Frozen Dairy Dessert

A fat-free ice cream-like frozen dairy product was prepared employing substantially the same procedure described in Example 5 except that the sugar concentration was increased to 14.0% and the protein concentration was 11.5%. The casein concentration was 9.2%. The resulting frozen dairy product had a creamy texture like full fat ice cream.

Example 7

Frozen Dairy Dessert

The following ingredient were used to prepare a fat-free ice cream-like product:

| Ingredient | Wt. (g) | Solids (g) |
|---|---|---|
| Keltose alginate | 3.6 | 3.6 |
| Locust bean gum | 1.5 | 1.5 |
| Carrageenan | 2.4 | 2.4 |
| Guar | 1.2 | 1.2 |
| Egg yolk | 27.0 | 13.5 |
| Sugar | 390.0 | 390.0 |
| Condensed skim milk (29.73% solids) | 861.0 | 256.0 |
| UF skim milk (29.73% solids) | 1184.0 | 352.0 |
| Water | 529.0 | 0 |
| Totals | 2999.7 | 1020.20 |

The dry ingredients were mixed and blended into the liquid ingredients. This mixture was heated to 69°C (157°F) in a double boiler and held at that temperature for ½ hour. This formulation contained about 179 grams of lactose. The mixture was cooled and flavors were added. The resulting frozen product had a texture like full fat ice cream.

Example 8

Frozen Dairy Dessert

A substantially fat-free frozen dessert was prepared according to the procedures described above and included the following ingredients:

| Ingredient | Wt. (lb) | kg | Solids (lb) | kg |
|---|---|---|---|---|
| Keltose alginate | 0.313 | 0.142 | 0.313 | 0.142 |
| Locust bean gum | 0.131 | 0.059 | 0.131 | 0.059 |
| Carrageenan | 0.208 | 0.094 | 0.208 | 0.094 |
| Guar | 0.104 | 0.047 | 0.104 | 0.047 |
| Yolk | 2.35 | 1.07 | 1.17 | 0.53 |
| Sugar | 36.5 | 16.6 | 36.5 | 16.6 |
| Condensed skim milk | 80.7 | 36.6 | 23.97 | 10.9 |
| UF skim milk | 82.6 | 37.5 | 26.15 | 11.9 |
| Water | 52.6 | 23.9 | 0 | 0 |
| Totals | 260.5 | 118.2 | 88.54 | 40.2 |

The above frozen dairy dessert mix was pasteurized, flavored and frozen. The resulting product had a mouthfeel like a full-fat ice cream and contained 5.99% lactose.

Example 9

Starch Modified Formulation

Starch was added to the frozen dairy dessert formulations of the present invention to enhance the texture of the product. The following ingredients were used to prepare such a formulation:

| Ingredient | Wt. (lb) | kg | Solids (lb) | kg |
|---|---|---|---|---|
| Keltose alginate | 1.2 | 0.544 | 1.2 | 0.544 |
| Locust bean gum | 0.5 | 0.227 | 0.5 | 0.227 |
| Carrageenan | 0.8 | 0.363 | 0.8 | 0.363 |
| Guar | 0.4 | 0.181 | 0.4 | 0.181 |
| Yolk | 9.0 | 4.1 | 4.5 | 2.0 |
| Sugar | 140.0 | 63.5 | 140.0 | 63.5 |
| Starch | 5.0 | 2.3 | 5.0 | 2.3 |
| Condensed skim milk | 313.7 | 142.3 | 96.61 | 43.8 |
| UF skim milk | 278.7 | 126.1 | 91.97 | 41.7 |
| Water | 250.7 | 113.4 | 0 | 0 |
| Totals | 1,000.0 | 453.6 | 340.98 | 154.67 |

The above formulation contained about 6% lactose and was pasteurized, flavored and frozen. The resulting product had a very good ice cream-like texture.

Example 10

Whole Egg Formulation

Whole eggs were used in a frozen dessert formulation of the present invention. The ingredients are listed below:

| Ingredient | Wt. (g) | Solids (g) |
|---|---|---|
| Keltose alginate | 1.2 | 1.2 |
| Locust bean gum | 0.5 | 0.5 |
| Carrageenan | 0.8 | 0.8 |
| Guar | 0.4 | 0.4 |
| Whole egg | 22.5 | 6.12 |
| Sugar | 140.0 | 140.0 |
| Condensed skim milk | 313.7 | 95.61 |
| UF skim milk | 278.7 | 91.97 |
| Water | 242.2 | 0 |
| Totals | 1,000.0 | 336.60 |

The above formulation contained about 6% lactose and was pasteurized, flavored and frozen. The resulting product had a creamy ice cream-like texture.

Example 11

Double Egg Yolk Formulation

A double egg yolk formulation of the present invention was prepared employing the following ingredients:

| Ingredient | Wt. (g) | Solids (g) |
|---|---|---|
| Keltose alginate | 1.2 | 1.2 |
| Locust bean gum | 0.5 | 0.5 |
| Carrageenan | 0.8 | 0.8 |
| Guar | 0.4 | 0.4 |
| Yolk | 18.0 | 9.0 |
| Sugar | 140.0 | 140.0 |
| Condensed skim milk | 313.7 | 95.61 |
| UF skim milk | 278.7 | 91.97 |
| Water | 246.7 | 0 |
| Totals | 1,000.0 | 339.48 |

The above frozen dairy mix had about 6% lactose and was pasteurized, flavored and frozen. The resulting product had the mouth feel of a full fat ice cream. However, this double egg yolk formulation had a higher fat content.

Example 12

Potato Starch Modified Low Fat Frozen Dairy Dessert

The following two formulations were prepared as frozen dessert mixes and included potato starch sugar:

| Formulation 1 | | |
|---|---|---|
| Ingredient | Wt. (g) | Solids (g) |
| Keltose alginate | 1.2 | 1.2 |
| Locust bean gum | 0.5 | 0.5 |
| Carrageenan | 0.8 | 0.8 |
| Guar | 0.4 | 0.4 |
| Yolk | 10.0 | 5.0 |
| Sugar | 140.0 | 140.0 |
| Potato starch augar | 10.0 | 10.0 |
| Condensed skim milk | 218.7 | 63.3 |
| UF skim milk | 616.0 | 116.9 |
| Water | 2.4 | 0 |
| Totals | 1,000.00 | 338.1 |

| Formulation 2 | | |
| --- | --- | --- |
| Ingredient | Wt. (g) | Solids (g) |
| Keltose alginate | 1.2 | 1.2 |
| Locust bean gum | 0.5 | 0.5 |
| Carrageenan | 0.8 | 0.8 |
| Guar | 0.4 | 0.4 |
| Yolk | 10.0 | 5.0 |
| Sugar | 140.0 | 140.0 |
| Potato starch augar | 5.0 | 5.0 |
| Condensed skim milk | 205.4 | 61.4 |
| UF skim milk | 662.5 | 125.7 |
| Water | 0 | 0 |
| Totals | 1,025.8 | 340.0 |

The above ingredients were blended together, heated to 69°C (157°F) for ½ hour and then cooled in a freezer. Flavors were then added to the mixes with mixing before the mixtures were frozen. The resulting frozen dairy desserts had a creamy, ice cream-like texture. However, there was a funny off-flavor in both formulations presumably due to the potato starch sugar.

Example 13

Scraped Surface Head Exchanger Pasteurization

The following frozen dairy mix was made:

| Ingredient | Wt. (lb.) | kg | Solids (lb.) | kg |
| --- | --- | --- | --- | --- |
| Keltose alginate | 0.12 | 0.05 | 0.12 | 0.05 |
| Locust bean gum | 0.05 | 0.02 | 0.05 | 0.02 |
| Carrageenan | 0.08 | 0.04 | 0.08 | 0.04 |
| Guar | 0.04 | 0.02 | 0.04 | 0.02 |
| Yolk | 1.0 | 0.5 | 0.5 | 0.2 |
| Sugar | 14.0 | 6.4 | 14.0 | 6.4 |
| Starch | 1.0 | 0.5 | 1.0 | 0.5 |
| Condensed skim milk | 36.9 | 16.7 | 10.49 | 4.76 |
| UF skim milk | 28.0 | 12.7 | 7.19 | 3.26 |
| Water | 18.8 | 8.5 | 0 | 0 |
| Totals | 99.99 | 45.35 | 33.47 | 15.18 |

The above ingredients were blended and then pasteurized in a scraped surface heat exchanger. Various aliquots of the above 45.4 kg (100 pound) batch were flavored as follows and frozen:

| Aliquot | Flavor | |
|---------|--------------|------------------|
| | Quest (Wt. %) | Vanilla (Wt. %) |
| 1 | 0.05 | 0.7 |
| 2 | 0.10 | 0.7 |
| 3 | .05 | 1.0 |
| 4 | 0.10 | 1.0 |
| 5 | 0.05 | 1.4 |
| 6 | 0.10 | 1.0 |
| 7 | 0.20 | 0.52 |

All of the above flavored frozen dairy dessert aliquots had a texture like full-fat ice cream.

Example 14

Stabilizer Formulations

Four (4) formulations of frozen dairy desserts were made containing (1) substantially non-aggregated casein micelles (UF skim milk) as a fat substitute, (2) 0.01% egg yolk, (3) 14% sugar, (4) flavors, and (5) the stabilization systems described below in weight percent of final product.

| Gum Component | Stabilizer Formula | | | |
|---------------|------|------|------|------|
| | 1 | 2 | 3 | 4 |
| Keltose alginate | 0.12 | 0.12 | 0.27 | 0.25 |
| Locust bean gum | 0.05 | 0.05 | 0.25 | 0.10 |
| Carrageenan | 0.08 | 0.08 | 0.10 | 0.10 |
| Guar gum | 0.04 | 0.30 | 0.25 | 0.25 |

All formulations had a texture like full-fat ice cream with the formulation containing Stabilizer Formula 1 being preferred.

Example 15

Diafiltered UF Skim Milk As A Casein Micelle Source

Skim milk was ultrafiltered (10,000 Dalton filter, i.e., AMICON wide channel membrane P-10 DD 1118502) to a 6-fold concentration (6:1 volume reduction or 6X). Five volumes of water were added to the retentate and the diluted retentate was ultrafiltered at 6:1 volume reduction. This diafiltered UF skim milk was then used to prepare the following frozen dairy dessert mix:

| Ingredient | Weight (lb) | kg |
|---|---|---|
| Condensed skim milk (29.52% solids) | 640.0 | 290.3 |
| Diafiltered UF skim milk (30.3% solids) | 496.0 | 225.0 |
| Skim milk (8.71% solids) | 706.0 | 320.2 |
| Sugar | 308.0 | 139.7 |
| Corn starch (MIRAGEL 463) | 22.0 | 10.0 |
| Sugared egg yolk | 22.0 | 10.0 |
| Alginate (KELTOSE) | 2.64 | 1.20 |
| Carrageenan (SEAKEM CM614) | 1.76 | 0.80 |
| Locust bean gum (MEYPRODINE 200) | 1.1 | 0.5 |
| Guar gum | 0.88 | 0.40 |

A pre-blend of all of the Alginate, carrageenan, locust bean gum, guar gum and starch and 49 kg (108 lb.) of the sugar was prepared by admixing these dry ingredients. A Liquivertor™ liquifier was charged with all of the condensed skim milk, diafiltered UF skim milk and skim milk and mixed. The pre-blend was slowly added to the liquifier vortex. The balance of the sugar (90.72 kg) (200 lb.) was added to the liquifier followed by the addition of the egg yolk. The mixture was blended for 15-20 minutes. The resulting mixture had a pH of 6.39 and a density of 1.15 g/cm³. This mixture was pasteurized at 80°C (176°F) for 25 seconds. After pasteurization the mixture was flavored with BECKS vanilla (0.7% total weight) and QUEST cream 8760084 (0.05% total weight). The flavored mix was frozen. The frozen dairy dessert had a texture like a full fat ice cream.

Example 16

Freezer Stability

The frozen dairy desserts of Examples 1-15 were hardened to -29°C (-20°F) and they retained their creamy texture when eaten at ice cream serving temperature (0-10°F). The formulation of Example 6 was held for three months at -29°C (-20°F) and had a creamy texture when thawed and eaten at (0-10°F) 0-(-12)°C.

Example 17

Chocolate Mousse

The following ingredients are mixed to form a chocolate mousse:

|                          | %       |
|--------------------------|---------|
| Milk protein hydrolysate | 2.0     |
| Carrageenan              | 1.0     |
| Instant starch           | 1.0     |
| Sugar                    | 8.5     |
| Cocoa                    | 2.5     |
| NFDM                     | 3.0     |
| UF skim smilk (6X or 8X) | 14.0    |
| Water                    | 28.00   |
| Skim milk                | 40.00   |
|                          | 100.00% |

Example 18

Whipped Topping

The following ingredients are mixed to form a whipped topping. Flavors and coloring are added as desired:

|                          | %        |
|--------------------------|----------|
| Milk protein isolate     | 1.56     |
| Milk protein hydrolysate | 0.20     |
| Sucrose                  | 12.00    |
| Dextrose                 | 0.60     |
| Stabilizers              | 0.10     |
| Water                    | 38.84    |
| Emulsifiers              | 0.70     |
| Flavors and colors       | optional |
| UF skim milk (6X or 8X)  | 26.00    |
| Skim milk                | 20.00    |
|                          | 100.00%  |

In further embodiments, non-aggregated casein micelles are added to puddings, and whipped toppings as a total or partial fat/cream substitute whereby the resulting food products have the texture and mouthfeel of their full-fat counterparts.

**Claims**

1. A method for reducing fat or cream in a whipped or quiescently frozen or refrigerated dessert containing the same which comprises substituting all or a portion of the fat or cream with substantially non-aggregated casein micelles wherein the casein micelles are present in the whipped or quiescently frozen or refrigerated dessert in an amount of at least 7 percent by total weight.

2. The method of claim 1 wherein the casein micelle concentration is between about 8 and 12 percent by weight of the food product.

3. The method of claim 1 wherein the food product is a frozen dairy dessert.

4. The method of claim 1 wherein the dessert is a mousse, pudding or whipped topping.

5. The method of claim 1 wherein a major portion of the non-aggregated casein micelles are provided by ultrafiltered skim milk or diafiltered skim milk.

6. An ice cream-like low-fat or no fat frozen dairy dessert which comprises:

   (a) at least 7 weight percent of substantially non-aggregated casein micelles;
   (b) a sweetener;
   (c) flavors;
   (d) stabilizers; and
   (e) water.

7. The frozen dairy dessert of claim 6 wherein the casein micelle concentration is between about 8 and 12 weight percent.

8. The frozen dairy dessert of claim 6 further comprising:

   (f) starch, and
   (g) egg yolk.

9. The frozen dairy dessert of claim 8 wherein a major portion of the non-aggregated casein micelles are provided by ultrafiltered skim milk or diafiltered skim milk.

10. The frozen dairy dessert of claim 6, characterized in that the casein micelles are provided by ultrafiltered milk proteins and non fat milk solids, that the sweetener is sugar and corn syrup solids and that it furthermore comprises starch and egg yolk whereby said ingredients are present in the following amounts:

| Ingredient | Amount (Wt. %) |
|---|---|
| Sugar | 10 - 20 |
| Stabilizers | 0 - 1.0 |
| Ultrafiltered milk protein | 3.7 - 10.2 |
| Egg Yolk | 0 - 3 |
| Corn Syrup Solids | 0 - 5 |
| Starch | 0 - 1 |
| Milk Solids, non-fat | 6 - 12 |
| Water Content | 60 - 70 |

**Patentansprüche**

1. Ein Verfahren für die Verminderung des Fetts oder der Sahne in einem diese enthaltenden geschlagenen oder ruhig tiefgekühlten oder gefrorenen Dessert, welches das Ersetzen allen oder eines Teils des Fettes oder der Sahne mit im wesentlichen nicht aggregierten Caseinmicellen umfasst, wobei die Caseinmicellen im geschlagenen oder ruhig tiefgekühlten oder gefrorenen Dessert in einer Menge von mindestens 7 % bezogen auf das Gesamtgewicht anwesend sind.

2. Das Verfahren gemäss Anspruch 1, worin die Caseinmicellenkonzentration zwischen etwa 8 und 12 Gew.-% des Nahrungsmittels betragen.

3. Das Verfahren gemäss Anspruch 1, worin das Nahrungsmittel ein gefrorenes Milchdessert ist.

4. Das Verfahren gemäss Anspruch 1, worin das Dessert eine Mousse, ein Pudding oder ein geschlagener Ueberzug ist.

5. Das Verfahren gemäss Anspruch 1, worin eine Hauptmenge der nicht-aggregierten Caseinmicellen mittels ultrafiltrierter Magermilch oder diafiltrierter Magermilch bereitgestellt wird.

6. Ein Eiscrème-ähnliches gefrorenes Milchdessert mit niedrigem oder ohne Fettgehalt, welches umfasst:

 (a) mindestens 7 Gew.-% im wesentlichen nicht-aggregierte Caseinmicellen;
 (b) einen Süssstoff;
 (c) Aromastoffe;
 (d) Stabilisatoren; und
 (e) Wasser.

7. Das gefrorene Milchdessert gemäss Anspruch 6, worin die Caseinmicellenkonzentration zwischen etwa 8 und 12 Gew.-% liegt.

8. Das gefrorene Milchdessert gemäss Anspruch 6, welches weiter enthält:

 (f) Stärke, und
 (g) Eigelb.

9. Das gefrorene Milchdessert gemäss Anspruch 8, worin eine Hauptmenge der nicht-aggregierten Caseinmicellen durch ultrafiltrierte Magermilch oder diafiltrierte Magermilch bereitgestellt werden.

10. Das gefrorene Milchdessert gemäss Anspruch 6, dadurch gekennzeichnet, dass die Caseinmicellen durch ultrafiltrierte Milchproteine und nicht-fette Milchfeststoffe bereitgestellt werden, dass der Süssstoff Zucker und Maissirupfeststoffe sind und dass es zusätzlich Stärke und Eigelb enthält, wobei die Zutaten in den folgenden Mengen anwesend sind:

| Zutaten | Menge (Gew.-%) |
| --- | --- |
| Zucker | 10 - 20 |
| Stabilisatoren | 0 - 1,0 |
| Ultrafiltriertes Milchprotein | 3,7 - 10,2 |
| Eigelb | 0 - 3 |
| Maissirupfeststoffe | 0 - 5 |
| Stärke | 0 - 1 |
| Milchfeststoffe, nicht-fett | 6 - 12 |
| Wassergehalt | 60 - 70 |

## Revendications

1. Un procédé pour diminuer la graisse ou la crème dans un dessert glacé en fouettant ou en le reposant ou un dessert congelé contenant ce dernier, qui comprend la substitution de tout ou d'une portion de la graisse ou de la crème avec des micelles de caséine agrégées dont les micelles de caséine sont présentes dans le dessert fouetté ou glacé en le reposant, ou congelé, dans une quantité d'au moins 7 % du poids total.

2. Le procédé suivant la revendication 1, dans lequel la concentration des micelles de caséine est entre environ 8 et 12% par poids du produit alimentaire.

3. Le procédé suivant la revendication 1, dans lequel le produit alimentaire est un dessert laitier congelé.

4. Le procédé suivant la revendication 1, dans lequel le dessert est une mousse, du pudding ou une pâte à tartiner fouettée.

5. Le procédé suivant la revendication 1, dans lequel une portion essentielle des micelles de caséine non-agrégées est fournie par du lait écrémé ultrafiltré ou du lait écrémé diafiltré.

6. Un dessert laitier congelé avec peu ou pas de graisse, ressemblant à la crème glacée, comprenant :

   (a) au moins 7 % par poids de micelles de caséine non-agrégées;
   (b) un édulcorant;
   (c) des arômes;
   (d) des stabilisants; et
   (e) de l'eau.

7. Le dessert laitier congelé de la revendication 6 dans lequel la concentration des micelles de caséine est comprise entre environ 8 et 12 %.

8. Le dessert laitier congelé de la revendication 6, comprenant en plus :

   (f) de l'amidon, et
   (g) du jaune d'oeuf.

9. Le dessert laitier congelé de la revendication 8 dans lequel une portion essentielle des micelles de caséine non-agrégées est fournie par du lait écrémé ultrafiltré ou du lait écrémé diafiltré.

10. Le dessert laitier congelé de la revendication 6 caractérisé en ce que les micelles de caséine sont fournies par des protéines de lait ultrafiltré et des produits laitiers solides non-graisseux, que l'édulcorant est du sucre et des produits solides du sirop de maïs et qu'il contient en outre de l'amidon et du jaune d'oeuf dont lesdits ingrédients sont présents dans les quantités suivantes :

| Ingrédient | Quantité (% par poids) |
|---|---|
| sucre | 10 - 20 |
| stabilisant | 0 - 1,0 |
| protéine de lait ultrafiltré | 3,7 -10,2 |
| jaune d'oeuf | 0 - 3 |
| produits solides du sirop de maïs | 0 - 5 |
| amidon | 0 - 1 |
| produits solides de lait non-graisseux | 6 - 12 |
| eau | 60 - 70 |